# EUROPÄISCHE PATENTANMELDUNG

(11) **EP 1 261 051 A2**
(43) Veröffentlichungstag der Anmeldung: **27.11.2002**
(21) Anmeldenummer: 02009320.9
(22) Anmeldetag: 02.05.2002
(51) Int. Cl.: H01M 8/02, H01M 2/08

(54) **Dichtung**

(30) Priorität: 26.05.2001 DE 10125777
(71) Anmelder: ElringKlinger AG, 72581 Dettingen (DE)
(72) Erfinder: Zerfass, Hans-Rainer, Dr., 65232 Taunusstein (DE); Diez, Armin, 73252 Lenningen (DE)
(74) Vertreter: Hoeger, Stellrecht & Partner

(57) **Zusammenfassung**

Um eine Dichtung zum Abdichten eines Dichtspalts zwischen zwei abzudichtenden, elektrisch leitfähigen Bauteilen, insbesondere zwischen zwei Bauteilen eines Brennstoffzellenblockverbunds, unter elektrischer Isolation der abzudichtenden Bauteile, zu schaffen, welche auch bei hohen Betriebstemperaturen und über eine lange Betriebsdauer hinweg eine ausreichende Fluiddichtheit und eine ausreichende elektrische Isolationswirkung aufweist, wird vorgeschlagen, daß die Dichtung mindestens ein Dichtelement umfaßt, welches ein keramisches Material umfaßt, wobei die Dichtung ringförmig ausgebildet ist und mindestens eine Anlagefläche für mindestens eines der abzudichtenden Bauteile aufweist, welche zumindest teilweise im wesentlichen parallel oder schräg zur Ringachse der Dichtung ausgerichtet ist.

## Beschreibung

Die vorliegende Erfindung betrifft eine Dichtung zum Abdichten eines Dichtspalts zwischen zwei abzudichtenden, elektrisch leitfähigen Bauteilen, insbesondere zwischen zwei Bauteilen eines Brennstoffzellenblockverbunds, unter elektrischer Isolation der abzudichtenden Bauteile.

Solche Dichtungen zur elektrisch isolierenden Abdichtung zwischen zwei abzudichtenden Bauteilen eines Brennstoffzellenblockverbunds sind aus dem Stand der Technik bekannt.

Insbesondere ist es bekannt, eine solche Dichtung aus einem Glaslot zu bilden.

Ein solches Glaslot ist beispielsweise in der EP 0 907 215 A1 beschrieben.

Wird eine solche Glaslot-Dichtung bei vergleichsweise hohen Betriebstemperaturen verwendet, wie sie beispielsweise in einer Hochtemperatur-Brennstoffzelle herrschen (beispielsweise ungefähr 800°C), so hat dies unter anderem den Nachteil, daß das Glaslot bei einer solchen Betriebstemperatur bereits eine vergleichsweise hohe elektrische Leitfähigkeit aufweist, so daß die elektrische Isolation zwischen den abzudichtenden, elektrisch leitfähigen Bauteilen nicht mehr hinreichend gewährleistet ist und sich infolgedessen der Wirkungsgrad der Brennstoffzelle verschlechtert. Außerdem ist die Abdichtwirkung der Glaslot-Dichtung aufgrund der nach einiger Betriebszeit einsetzenden Rekristallisation des Glaslots nicht über eine ausreichend lange Betriebsdauer der Dichtung gesichert.

Der vorliegenden Erfindung liegt daher die Aufgabe zugrunde, eine Dichtung der eingangs genannten Art zu schaffen, welche auch bei hohen Betriebstemperaturen und über eine lange Betriebsdauer hinweg eine ausreichende Fluiddichtheit und eine ausreichende elektrische Isolationswirkung aufweist.

Diese Aufgabe wird bei einer Dichtung mit den Merkmalen des Oberbegriffs von Anspruch 1 erfindungsgemäß dadurch gelöst, daß die Dichtung mindestens ein Dichtelement umfaßt, welches ein keramisches Material umfaßt, wobei die Dichtung ringförmig ausgebildet ist und mindestens eine Anlagefläche für mindestens eines der abzudichtenden Bauteile aufweist, welche zumindest teilweise im wesentlichen parallel oder schräg zur Ringachse der Dichtung ausgerichtet ist.

Durch die Verwendung eines Dichtelements aus einem keramischen Material wird erreicht, daß die elektrische Isolationswirkung der Dichtung auch bei hohen Betriebstemperaturen über lange Betriebszeiten hinweg aufrechterhalten bleibt.

Außerdem ist das keramische Material auch bei hohen Betriebstemperaturen im wesentlichen formstabil, so daß auch die Fluiddichtheit der Dichtung gewährleistet ist.

Dadurch, daß die Dichtung ringförmig ausgebildet ist und mindestens eine der Anlageflächen für die abzudichtenden Bauteile im wesentlichen parallel oder schräg zur Ringachse der Dichtung ausgerichtet ist, wird erreicht, daß der Anpreßdruck, mit dem das betreffende Bauteil gegen die Anlagefläche der Dichtung gepreßt wird, zumindest teilweise unabhängig von einer externen Spannkraft, mit welcher die abzudichtenden Bauteile gegeneinander verspannt werden, gewählt werden kann.

Insbesondere ist es auf diese Weise möglich, auch dann einen ausreichenden Anpreßdruck zwischen dem abzudichtenden Bauteil und der Dichtung zu erzielen, wenn die Dichtung im Kraftnebenschluß eingebaut wird.

Unter einer schräg zur Ringachse ausgerichteten Anlagefläche ist dabei eine Anlagefläche zu verstehen, welche unter einem spitzen Winkel gegen die Ringachse geneigt ist, also weder senkrecht noch parallel zur Ringachse ausgerichtet ist.

Vorzugsweise ist die mindestens eine Anlagefläche für mindestens eines der abzudichtenden Bauteile im wesentlichen parallel zur Ringsachse der Dichtung ausgerichtet.

Bei einer bevorzugten Ausgestaltung der Dichtung ist ferner vorgesehen, daß mindestens eine Anlagefläche für mindestens eines der abzudichtenden Bauteile an dem Dichtelement angeordnet ist.

Da keramische Materialien in der Regel nur vergleichsweise geringen Zug- und Biegebeanspruchungen standhalten, ist vorteilhafterweise vorgesehen, daß das Dichtelement im Betriebszustand der Dichtung mit einer Druckspannung beaufschlagt ist, um einen ausreichenden Anpreßdruck an der Anlagefläche der Dichtung sicherzustellen.

Vorzugsweise ist das Dichtelement im Betriebszustand der Dichtung mit einer Druckspannung beaufschlagt, die von einer externen Verspannung der abzudichtenden Bauteile im wesentlichen unabhängig ist.

Eine sehr gute Fluiddichtheit der Dichtung in allen Betriebszuständen, insbesondere auch während der Erwärmung auf die Betriebstemperatur und während der Abkühlung von der Betriebstemperatur auf die Raumtemperatur, wird erzielt, wenn das Dichtelement auch bei Raumtemperatur mit einer Druckspannung beaufschlagt ist.

Bei einer bevorzugten Ausgestaltung der erfindungsgemäßen Dichtung ist vorgesehen, daß das Dichtelement mindestens einen gekrümmten Abschnitt aufweist.

Insbesondere kann vorgesehen sein, daß das Dichtelement ringförmig geschlossen ausgebildet ist.

Um die Herstellung und Montage der Dichtung zu vereinfachen, ist vorzugsweise vorgesehen, daß das Dichtelement einstückig ausgebildet ist.

Als Material für das Dichtelement kann beispielsweise ein Magnesium-Silikat, insbesondere Forsterit, oder eine Oxidkeramik, beispielsweise ein Aluminiumoxid oder ein Zirkonoxid oder eine Mischung hiervon, verwendet werden.

Vorzugsweise wird ein keramisches Material verwendet, das im Temperaturbereich von der Raumtemperatur (20°C) bis zu der Betriebstemperatur der Dichtung (beispielsweise 800°C) einen mittleren linearen Wärmeausdehnungskoeffizienten von mindestens ungefähr 6 · 10⁻⁶ K⁻¹, vorzugsweise von mindestens ungefähr 9 · 10⁻⁶ K⁻¹ aufweist.

Bei einer bevorzugten Ausgestaltung der erfindungsgemäßen Dichtung ist vorgesehen, daß das Dichtelement im Betriebszustand der Dichtung mit einer Druckspannung beaufschlagt ist, die von einer der Ringachse abgewandten Außenseite zu einer der Ringachse zugewandten Innenseite des Dichtelements hin gerichtet ist.

Dabei kann vorgesehen sein, daß die Außenseite des Dichtelements zumindest teilweise konvex gekrümmt ist und/oder daß die Innenseite des Dichtelements zumindest teilweise konkav gekrümmt ist.

Um die abzudichtenden Bauteile in allen Betriebszuständen sicher voneinander getrennt zu halten, kann vorgesehen sein, daß das Dichtelement mit einem sich in der Längsrichtung des Dichtungselements erstreckenden Vorsprung versehen ist, welcher im montierten Zustand der Dichtung zwischen den abzudichtenden Bauteilen angeordnet sein kann.

Um einen ausreichenden Anpreßdruck an der Anlagefläche der Dichtung unabhängig von der Konfiguration der abzudichtenden Bauteile sicherzustellen, kann vorgesehen sein, daß die Dichtung ein Spannelement umfaßt, das im Betriebszustand der Dichtung das Dichtelement mit einer Druckspannung beaufschlagt.

Insbesondere kann vorgesehen sein, daß das Dichtelement eine zumindest teilweise konvex gekrümmte Außenseite aufweist und daß das Spannelement im Betriebszustand der Dichtung an der Außenseite anliegt.

Die von dem Spannelement im Betriebszustand der Dichtung auf das Dichtelement ausgeübte Druckspannung kann insbesondere dadurch erzeugt werden, daß der mittlere lineare Wärmeausdehnungskoeffizient des Materials des Dichtelements gleich groß ist wie oder größer ist als der mittlere lineare Wärmeausdehnungskoeffizient des Materials des Spannelements.

Unter dem "mittleren linearen Wärmeausdehnungskoeffizienten" eines Materials ist in dieser Beschreibung und in den Ansprüchen jeweils der mittlere lineare Wärmeausdehnungskoeffizient des betreffenden Materials im Temperaturbereich von der Raumtemperatur (20°C) bis zu der Betriebstemperatur der Dichtung (beispielsweise 800°C) zu verstehen, sofern kein hiervon abweichender Temperaturbereich ausdrücklich angegeben ist.

Durch die vorstehend angegebene Maßnahme wird erreicht, daß sich das Dichtelement beim Erwärmen der Dichtung auf die Betriebstemperatur stärker ausdehnt als das Spannelement, so daß das Spannelement die erforderliche Druckspannung auf die Außenseite des Dichtelements ausüben kann.

Alternativ oder ergänzend hierzu kann vorgesehen sein, daß das Dichtelement bereits bei Raumtemperatur in Preßpassung in dem Spannelement angeordnet ist.

Insbesondere kann vorgesehen sein, daß das Spannelement auf das Dichtelement aufgeschrumpft ist.

Um das Spannelement auf das Dichtelement aufzuschrumpfen, wird das Spannelement zunächst auf eine erhöhte Temperatur von beispielsweise 300°C erwärmt, wobei es sich ausdehnt, und dann das auf einer niedrigeren Temperatur befindliche Dichtelement in das Spannelement eingesetzt. Beim anschließenden Abkühlen und Zusammenziehen des Spannelements schrumpft dasselbe auf das Dichtelement auf.

Anspruch 16 ist auf eine Bauteilgruppe gerichtet, die zwei gegeneinander abzudichtende, elektrisch leitfähige Bauteile, insbesondere Bauteile eines Brennstoffzellenblockverbundes, und eine einen Dichtspalt zwischen den beiden abzudichtenden Bauteilen unter elektrischer Isolation der abzudichtenden Bauteile abdichtende erfindungsgemäße Dichtung umfaßt.

Bei einer bevorzugten Ausgestaltung der Bauteilgruppe ist vorgesehen, daß das Dichtelement eine zumindest teilweise konvex gekrümmte Außenseite aufweist und daß mindestens eines der abzudichtenden Bauteile im Betriebszustand der Dichtung an der Außenseite anliegt.

In diesem Fall kann das Dichtelement im Betriebszustand der Dichtung durch das an der Außenseite anliegende Bauteil mit einer Druckspannung beaufschlagt werden, wenn der mittlere lineare Wärmeausdehnungskoeffizient des Materials des Dichtelements gleich groß ist wie oder größer ist als der mittlere lineare Wärmeausdehnungskoeffizient des Materials des an der Außenseite des Dichtelements anliegenden abzudichtenden Bauteils.

Alternativ oder ergänzend hierzu kann auch vorgesehen sein, daß das Dichtelement bereits bei Raumtemperatur in Preßpassung in dem an der Außenseite des Dichtelements anliegenden abzudichtenden Bauteil angeordnet ist.

Diese Preßpassung kann insbesondere dadurch hergestellt werden, daß das an der Außenseite des Dichtelements anliegende abzudichtende Bauteil auf das Dichtelement aufgeschrumpft ist, wie dies bereits vorstehend im Zusammenhang mit einem Spannelement der Dichtung erläutert worden ist.

Vorzugsweise liegen beide abzudichtenden Bauteile an der Außenseite des Dichtelements an.

Alternativ hierzu kann auch vorgesehen sein, daß das Dichtelement eine zumindest teilweise konkav gekrümmte Innenseite aufweist und daß das weitere der abzudichtenden Bauteile an der Innenseite des Dichtelements anliegt.

In diesem Fall ist es für die Erzielung einer guten Fluiddichtheit in allen Betriebszuständen der Dichtung von Vorteil, wenn das Material des Dichtelements einen mittleren linearen Ausdehnungskoeffizienten aufweist, der gleich groß ist wie oder kleiner ist als der mittlere lineare Wärmeausdehnungskoeffizient des Materials des an der Innenseite des Dichtelements anliegenden Bauteils und gleich groß ist wie oder größer ist als der mittlere lineare Ausdehnungskoeffizient des Materials des an der Außenseite des Dichtelements anliegenden Bauteils. Auf diese Weise kann erreicht werden, daß zum einen das Dichtelement im Betriebszustand der Dichtung durch das an der Außenseite anliegende Bauteil mit einer Druckspannung beaufschlagt wird, und daß zum anderen im Betriebszustand der Dichtung kein Spalt zwischen der Innenseite des Dichtelements und dem an der Innenseite desselben anliegenden Bauteil entsteht.

Um mindestens eines der abzudichtenden Bauteile in einfacher Weise zur Anlage an die hierfür vorgesehene Anlagefläche der Dichtung bringen zu können, ist vorzugsweise vorgesehen, daß mindestens eines der abzudichtenden Bauteile eine Durchgangsöffnung und einen diese Durchgangsöffnung zumindest teilweise berandenden Kragen aufweist, wobei der Kragen zumindest teilweise an dem Dichtelement anliegt.

Die erfindungsgemäße Bauteilgruppe eignet sich insbesondere zur Verwendung in einem Brennstoffzellenblockverbund, insbesondere einem Hochtemperatur-Brennstoffzellenblockverbund.

Ein solcher Hochtemperatur-Brennstoffzellenblockverbund umfaßt eine Mehrzahl von Hochtemperatur-Brennstoffzelleneinheiten, die eine Betriebstemperatur von bis zu 950°C aufweisen und ohne externen Reformer direkt mit einem kohlenwasserstoffhaltigen Brenngas, wie beispielsweise Methan oder Erdgas oder, alternativ hierzu, unter Verwendung eines externen Reformers, mit einem Diesel- oder Benzinkraftstoff betrieben werden können.

Bei einer bevorzugten Ausgestaltung eines solchen Brennstoffzellenblockverbundes ist vorgesehen, daß die Ringachse der Dichtung im wesentlichen parallel zu einer Stapelrichtung, längs welcher Brennstoffzelleneinheiten des Brennstoffzellenblockverbunds gestapelt sind, ausgerichtet ist.

Ferner wird die Dichtung in dem Brennstoffzellenblockverbund vorteilhafterweise so angeordnet, daß die Ring-Durchgangsöffnung der Dichtung im Betrieb des Brennstoffzellenblockverbunds von einem Fluid, beispielsweise einem Brenngas oder Abgas oder einem Oxidationsmittel, durchströmt wird, wobei die ringförmige Dichtung eine Führung für das durch die Dichtung hindurchströmende Fluid bildet.

Weitere Merkmale und Vorteile der Erfindung sind Gegenstand der nachfolgenden Beschreibung und zeichnerischen Darstellung von Ausführungsbeispielen. In den Zeichnungen zeigen:
- Fig. 1: eine schematische perspektivische Darstellung einer Brennstoffzellenvorrichtung;
- Fig. 2: einen schematischen Längsschnitt durch einen in dem Gehäuse der Brennstoffzellenvorrichtung aus Fig. 1 angeordneten Brennstoffzellenblockverbund;
- Fig. 3: einen schematischen Längsschnitt durch eine Kathoden-Anoden-Elektrolyt-Einheit mit daran angrenzenden Kontaktplatten;
- Fig. 4: eine schematische perspektivische Explosionsdarstellung zweier in einer Stapelrichtung aufeinanderfolgender Brennstoffzelleneinheiten des Brennstoffzellenblockverbunds aus Fig. 2;
- Fig. 5: eine schematische Draufsicht auf eine Kontaktplatte einer der Brennstoffzelleneinheiten aus Fig. 4;
- Fig. 6: eine schematische Draufsicht auf einen Fluidführungsrahmen einer der Brennstoffzelleneinheiten aus Fig. 4;
- Fig. 7: den rechten Teil eines schematischen Längsschnitts durch drei längs der Stapelrichtung aufeinanderfolgende Brennstoffzelleneinheiten des Brennstoffzellenblockverbunds aus Fig. 2, wobei ein Fluidführungsrahmen einer Brennstoffzelleneinheit über eine Dichtung mit einem ringförmigen Dichtelement aus Keramik an der Kontaktplatte einer benachbarten Brennstoffzelleneinheit anliegt;
- Fig. 8: einen schematischen Schnitt durch die Dichtung aus Fig. 7;
- Fig. 9: eine ausschnittsweise Draufsicht auf einen gekrümmten Abschnitt der Dichtung aus Fig. 7;
- Fig. 10: einen schematischen Schnitt durch eine zweite Ausführungsform der Dichtung;
- Fig. 11: einen schematischen Schnitt durch eine dritte Ausführungsform der Dichtung;
- Fig. 12: einen schematischen Schnitt durch eine vierte Ausführungsform der Dichtung;
- Fig. 13: eine ausschnittsweise schematische Draufsicht auf eine Kontaktplatte mit mehreren Durchgangsöffnungen pro Gaskanal; und
- Fig. 14: eine ausschnittsweise schematische Draufsicht auf einen Fluidführungsrahmen mit mehreren Durchgangsöffnungen pro Gaskanal.

Gleiche oder funktional äquivalente Elemente sind in allen Figuren mit denselben Bezugszeichen bezeichnet.

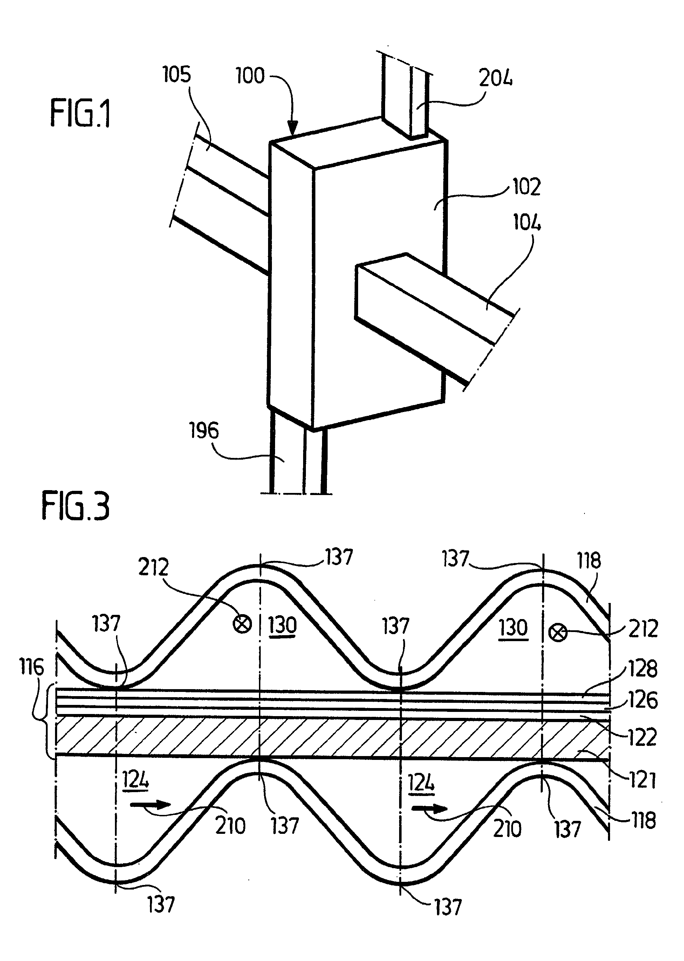

Eine in den Fig. 1 bis 9 dargestellte, als Ganzes mit 100 bezeichnete Brennstoffzellenvorrichtung umfaßt ein im wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

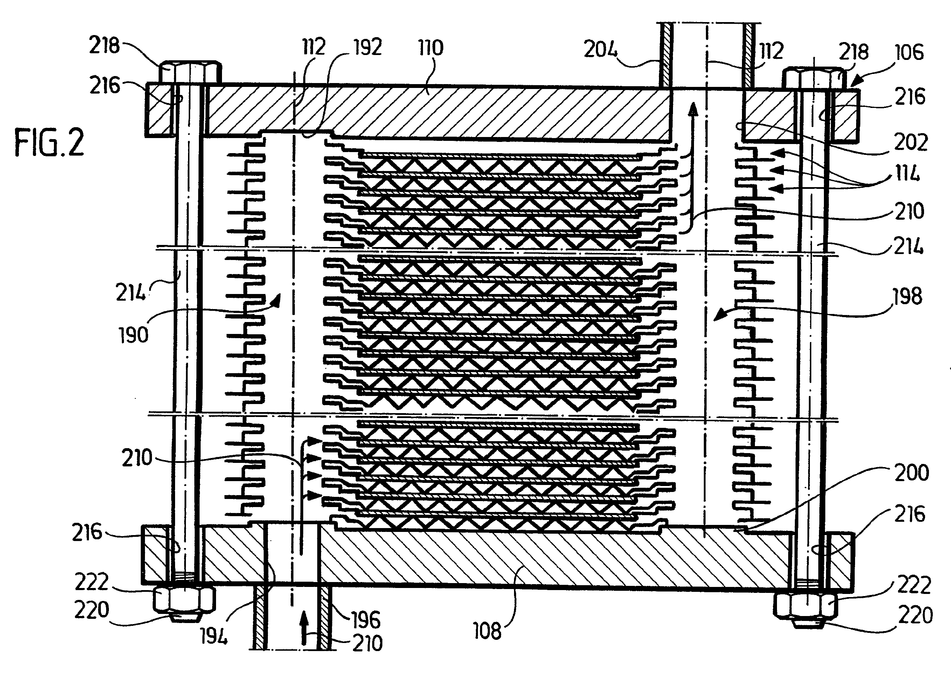

Im Innenraum des Gehäuses 102 ist ein in Fig. 2 als Ganzes dargestellter Brennstoffzellenblockverbund 106 angeordnet, welcher eine untere Endplatte 108, eine obere Endplatte 110 und eine Vielzahl zwischen der unteren Endplatte 108 und der oberen Endplatte 110 angeordneter, längs einer Stapelrichtung 112 aufeinanderfolgender Brennstoffzelleneinheiten 114 umfaßt.

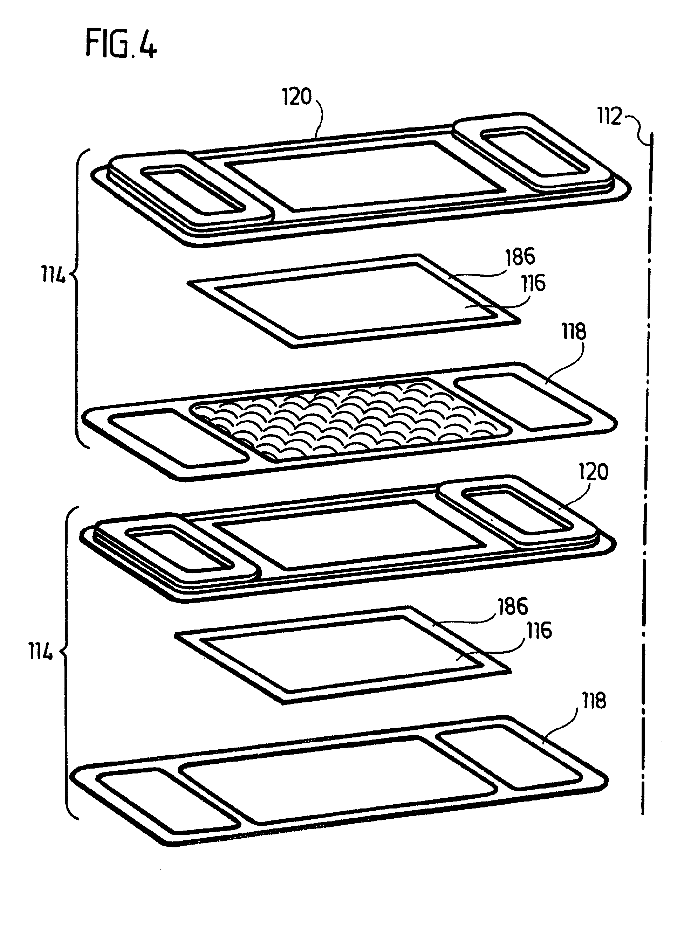

Wie am besten aus Fig. 4 zu ersehen ist, welche eine perspektivische Explosionsdarstellung zweier längs der Stapelrichtung 112 aufeinanderfolgender Brennstoffzelleneinheiten 114 zeigt, umfaßt jede der Brennstoffzelleneinheiten 114 eine im wesentlichen plattenförmige Kathoden-Anoden-Elektrolyt-Einheit 116 (im folgenden kurz: KAE-Einheit), die zwischen einer Kontaktplatte 118 und einem Fluidführungsrahmen 120 gehalten ist.

Die KAE-Einheit 116 umfaßt, wie in Fig. 3 rein schematisch dargestellt ist, eine gasdurchlässige, elektrisch leitfähige Trägerschicht 121, die beispielsweise als Netz aus einem metallischen Material ausgebildet sein kann, durch dessen Maschen ein Brenngas aus einem an die Trägerschicht 121 angrenzenden Brenngasraum 124 hindurchtreten kann.

Ferner umfaßt die KAE-Einheit 116 eine auf der Trägerschicht 121 angeordnete plattenförmige Anode 122 aus einem elektrisch leitfähigen keramischen Material, welches porös ist, um dem Brenngas aus dem Brenngasraum 124 den Durchtritt durch die Anode 122 zu dem an die Anode 122 angrenzenden Elektrolyten 126 zu ermöglichen.

Als Brenngas kann ein kohlenwasserstoffhaltiges Gasgemisch oder reiner Wasserstoff verwendet werden.

Der Elektrolyt 126 ist vorzugsweise als Feststoffelektrolyt ausgebildet.

Auf der der Anode 122 gegenüberliegenden Seite des Elektrolyten 126 grenzt an denselben eine plattenförmige Kathode 128 an, die aus einem elektrisch leitfähigen keramischen Material gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

Im Betrieb der Brennstoffzellenvorrichtung 100 weist die KAE-Einheit 116 jeder Brennstoffzelleneinheit 114 eine Temperatur von beispielsweise ungefähr 800°C auf, bei welcher der Elektrolyt 126 für Sauerstoffionen leitfähig ist. Das Oxidationsmittel aus dem Oxidationsmittelraum 130 nimmt an der Anode 122 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 freiwerdenden Elektronen von der Anode 122 über die Trägerschicht 121 abzuführen bzw. die für die Reaktion an der Kathode 128 benötigten Elektronen der Kathode 128 zuzuführen.

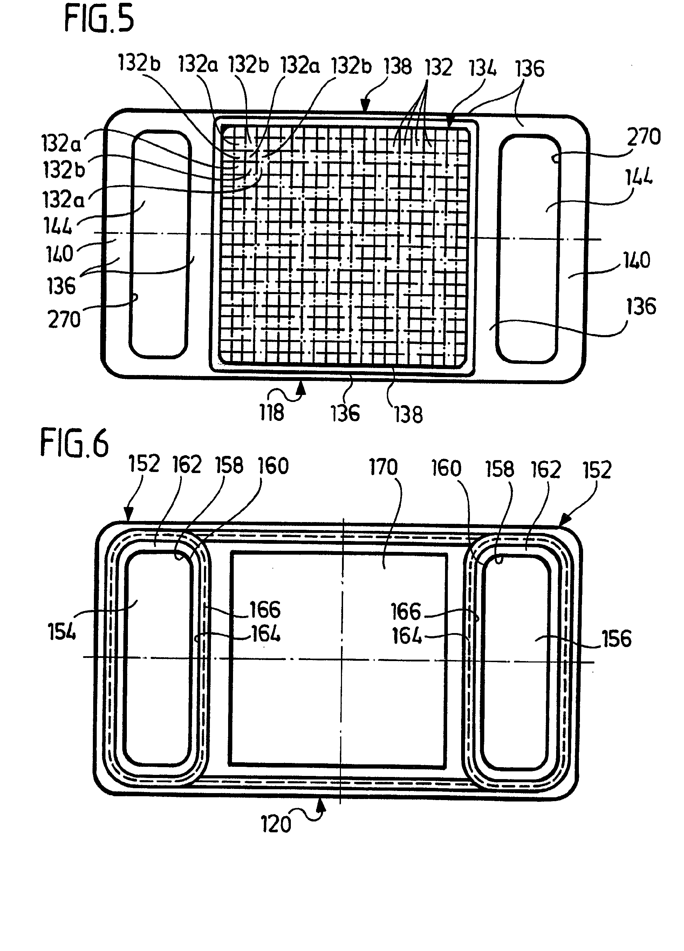

Hierzu besteht jede der Kontaktplatten 118 aus einem elektrisch gut leitfähigen Metallblech, das (wie am besten aus Fig. 5 zu ersehen ist) mit einer Vielzahl von Kontaktelementen 132 versehen ist, welche beispielsweise die Form von aneinander angrenzenden Vorsprüngen und Vertiefungen mit jeweils quadratischem Grundriß aufweisen, so daß das aus den Kontaktelementen 132 gebildete Kontaktfeld 134 der Kontaktplatte 118 die Struktur eines in zwei zueinander senkrechten Richtungen gewellten Wellblechs aufweist.

Jedes der Kontaktelemente 132 weist einen mittigen Kontaktbereich 137 auf, an dem es mit einer angrenzenden KAE-Einheit 116 in elektrisch leitendem Kontakt steht.

Die kathodenseitigen Kontaktelemente 132b der Kontaktplatten 118 stehen mit der Kathode 128 der einer benachbarten Brennstoffzelleneinheit 114 zugehörigen KAE-Einheit 116 in elektrisch leitfähigem Punktkontakt, so daß Elektronen von der Kontaktplatte 118 zu der Kathode 128 gelangen können. Auf diese Weise ermöglichen die Kontaktplatten 118 den Ladungsausgleich zwischen den Anoden 122 und Kathoden 128 längs der Stapelrichtung 112 aufeinanderfolgender KAE-Einheiten 116.

Die an den Enden des Brennstoffzellenblockverbunds 106 angeordneten Kontaktplatten 118 sind mit einem externen Stromkreislauf verbunden, um die an diesen randständigen Kontaktplatten 118 entstehenden elektrischen Ladungen abzugreifen.

Wie am besten aus der Draufsicht der Fig. 5 zu ersehen ist, ist das mit den Kontaktelementen 132 versehene mittige, rechteckige Kontaktfeld 134 jeder Kontaktplatte 118 von einem ebenen Flanschbereich 136 umgeben, welchen den äußeren Rand der Kontaktplatte 118 bildet.

Im Bereich der schmalen Längsseiten 138 des Flanschbereichs 136 liegt die Unterseite der KAE-Einheit 116 auf der Oberseite des Flanschbereichs 136 auf.

Die breiten Seitenbereiche 140 des Flanschbereichs 136 weisen jeweils eine Durchgangsöffnung 144 auf, welche den Durchtritt von den Brennstoffzelleneinheiten 114 zuzuführendem Brenngas bzw. von aus den Brennstoffzelleneinheiten 114 abzuführendem Abgas ermöglicht.

Jede der Kontaktplatten 118 ist als Blechformteil ausgebildet, welches aus einer im wesentlichen ebenen, im wesentlichen rechteckigen Blechlage durch Prägen und/oder Tiefziehen sowie durch Ausstanzen oder Ausschneiden der Durchgangsöffnungen 144 gebildet ist.

Auch die Fluidführungsrahmen 120 sind als Blechformteil aus einer im wesentlichen ebenen, im wesentlichen rechteckigen Blechlage gebildet.

Wie am besten aus Fig. 6 zu ersehen ist, weist jeder Fluidführungsrahmen 120 an seinen Endbereichen den Durchgangsöffnungen 144 in den Kontaktplatten entsprechende Durchgangsöffnungen, nämlich eine Brenngasdurchgangsöffnung 154 und eine Abgasdurchgangsöffnung 156, auf.

Wie aus Fig. 6 zu ersehen ist, weist jeder der Fluidführungsrahmen 120 zwischen den Durchgangsöffnungen 154, 156 eine im wesentlichen rechteckige, mittige Durchtrittsöffnung 170 für den Durchtritt der Kontaktelemente 132 der Kontaktplatte 118 einer benachbarten Brennstoffzelleneinheit 114 auf.

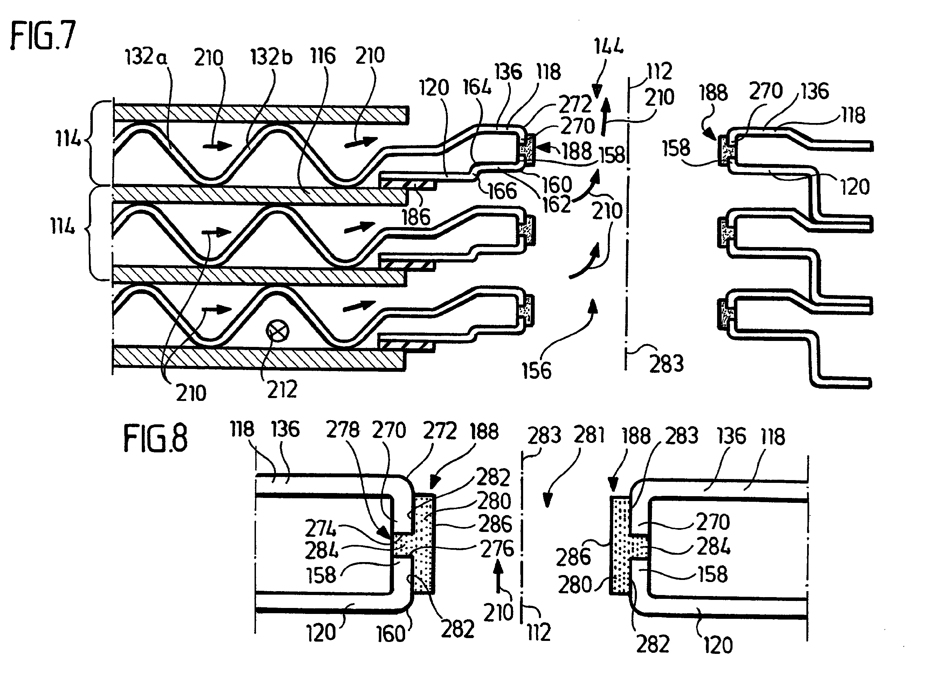

Wie am besten aus den Fig. 6 und 7 zu ersehen ist, ist jede der Durchgangsöffnungen 154, 156 in einem Fluidführungsrahmen 120 von einem sich längs der Stapelrichtung 112 erstreckenden Kragen 158, einem längs einer Biegelinie 160 an den Kragen 158 angrenzenden, sich senkrecht zur Stapelrichtung 112 von der Durchgangsöffnung weg erstreckenden Flanschbereich 162 und einem an einer Biegelinie 164 an den Flanschbereich 162 angrenzenden, parallel zur Stapelrichtung 112 ausgerichteten Kanalwandbereich 166 umgeben.

Wie aus den Fig. 7 und 8 zu ersehen ist, ist jede der Kontaktplatten 118 mit einem Kragen 270 versehen, welcher durch Umbiegen der Flanschbereichs 136 längs einer Biegelinie 272 ausgebildet ist, sich parallel zu der Stapelrichtung 112 von dem Flanschbereich 136 aus nach unten erstreckt und die jeweilige Durchgangsöffnung 144 der betreffenden Kontaktplatte 118 umgibt.

Wie am besten aus Fig. 8 zu ersehen ist, sind die Kragen 270 und 158 einer Kontaktplatte 118 bzw. eines derselben benachbarten Fluidführungsrahmens 120 miteinander fluchtend ausgerichtet und längs der Stapelrichtung 112 so voneinander beabstandet, daß zwischen dem unteren Rand 274 des Kragens 270 und dem oberen Rand 276 des Kragens 158 ein Dichtspalt 278 verbleibt, der mittels einer ringförmigen Gaskanal-Dichtung 188 mit Ringachse 283 abgedichtet ist.

Wie am besten aus Fig. 8 zu ersehen ist, umfaßt die Gaskanal-Dichtung 188 ein Dichtelement 280, das die Form einer ringförmig geschlossenen, eine Ring-Durchgangsöffnung 281 der Gaskanal-Dichtung 188 umgebenden Hülse aufweist.

Das Dichtelement 280 weist eine der Ring-Durchgangsöffnung 281 abgewandte Außenseite 282 auf, an deren oberem Bereich die Außenseite des Kragens 270 der Kontaktplatte 118 flächig anliegt und an deren unterem Bereich die Außenseite des Kragens 158 des Fluidführungsrahmens 120 flächig anliegt.

Ferner weist das Dichtelement 280 an seiner Außenseite 282 einen längs des Umfangs des Dichtelements 280 umlaufenden Vorsprung 284 auf, welcher sich in den Dichtspalt 278 hineinerstreckt und so den unteren Rand 274 des Kragens 270 von dem oberen Rand 276 des Kragens 158 trennt.

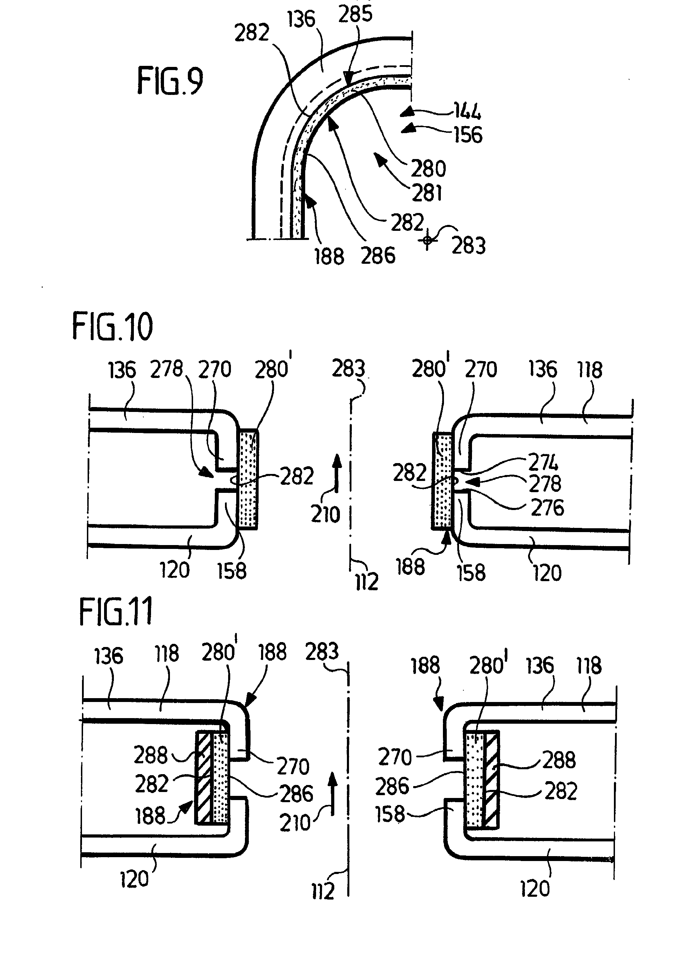

Wie aus der Draufsicht auf die Gaskanal-Dichtung 188 in Fig. 9 zu ersehen ist, weist das Dichtelement 280 in den Eckbereichen der Durchgangsöffnungen 144, 156 jeweils einen gekrümmten Abschnitt 285 auf, in welchem die Außenseite 282 des Dichtelement 280 konvex gekrümmt ist und die der Ring-Durchgangsöffnung 281 zugewandte Innenseite 286 des Dichtelements 280 konkav gekrümmt ist.

Das Dichtelement 280 ist aus einem keramischen Material gebildet, welches auch bei der Betriebstemperatur der Brennstoffzellenvorrichtung 100 von beispielsweise 800°C fest und formstabil ist und einen hohen elektrischen Widerstand aufweist.

Als keramisches Material für das Dichtelement 280 kann beispielsweise ein Magnesium-Silikat, insbesondere Forsterit (Bezeichnung nach DIN EN 60672: C250) verwendet werden. Forsterit weist im Temperaturbereich von 20°C bis 600°C einen mittleren linearen Wärmeausdehnungskoeffizienten α von ungefähr 10 · 10⁻⁶ K⁻¹ bis ungefähr 11 · 10⁻⁶ K⁻¹ auf. Der spezifische elektrische Widerstand von Forsterit liegt bei einer Temperatur von 600°C bei ungefähr 10⁵ Ωm.

Dieses Material kann beispielsweise von der Firma Sembach Technische Keramik, Oskar-Sembach-Straße 15, 91207 Lauff an der Pegnitz, Deutschland, bezogen werden.

Alternativ oder ergänzend hierzu kann als keramisches Material für das Dichtelement 280 auch ein Aluminiumoxid, insbesondere das nach DIN EN 60672 mit C799 bezeichnete Aluminiumoxid, verwendet werden. Das Aluminiumoxid C799 weist im Bereich von 20°C bis 600°C einen mittleren linearen Ausdehnungskoeffizienten α von ungefähr 7 · 10⁻⁶ K⁻¹ bis ungefähr 8 · 10⁻⁶ K⁻¹ auf. Der spezifische elektrische Widerstand dieses Materials beträgt bei einer Temperatur von 600°C ungefähr 10⁶ Ωm.

Dieses Material kann beispielsweise unter der Bezeichnung "A99" von der vorstehend genannten Firma Sembach Technische Keramik bezogen werden.

Alternativ oder ergänzend zu den vorstehend genannten Materialien kann als keramisches Material für das Dichtelement 280 auch ein Zirkonoxid, insbesondere ein durch die Beimengung kleiner Mengen von Yttriumoxid zur Stabilisierung der Kristallstruktur teilstabilisiertes Zirkonoxid, verwendet werden.

Das teilstabilisierte Zirkonoxid weist im Temperaturbereich von 30°C bis 1000°C einen mittleren linearen Wärmeausdehnungskoeffizienten α von ungefähr 10 · 10⁻⁶ K⁻¹ bis ungefähr 12,5 · 10⁻⁶ K⁻¹ auf. Der spezifische elektrische Widerstand dieses Materials beträgt bei einer Temperatur von 600°C ungefähr 10³ Ωm bis ungefähr 10⁶ Ωm.

Das Dichtelement 280 kann aus den vorstehend genannten keramischen Materialien beispielsweise durch keramisches Spritzgießen hergestellt werden. Bei diesem Verfahren wird ein keramisches Pulver aus dem gewünschten Material mit einem organischen Bindersystem plastifiziert und auf einer Kunststoffhochdruckspritzgußmaschine verarbeitet. Nach der Formgebung wird das organische Bindemittel entfernt. Anschließend wird das durch Spritzgießen hergestellte Formteil gesintert und erforderlichenfalls nachbearbeitet.

Das Dichtelement 280 sitzt in Preßpassung in dem Kragen 270 der Kontaktplatte 118 und in dem Kragen 158 des Fluidführungsrahmens 120, wobei das Dichtelement 280 durch den Kragen 270 und den Kragen 158 mit einer zur Ringachse 283 des Dichtelements 280 gerichteten Druckspannung beaufschlagt wird.

Der Preßsitz des Dichtelements 280 in den Kragen 270 und 158 wird erzielt, indem bei der Montage der Brennstoffzellenvorrichtung 100 der Flanschbereich 136 der Kontaktplatte 118 und der Fluidführungsrahmen 120 auf eine erhöhte Temperatur von beispielsweise 300°C erwärmt werden, um die Durchgangsöffnungen 144 bzw. 154, 156, die von dem Kragen 270 bzw. 158 umgeben sind, zu vergrößern. In die solchermaßen durch Wärmedehnung erweiterten Kragen 270 und 158 wird das kältere Dichtelement 280, welches beispielsweise Raumtemperatur (20°C) aufweist, eingesetzt. Bei der anschließenden Abkühlung der Kontaktplatte 118 und des Fluidführungsrahmens 120 schrumpfen dann die Kragen 270 und 158 auf die Außenseite 282 des Dichtelements 280 auf, wodurch das Dichtelement 280 bereits bei Raumtemperatur mit einer Druckspannung beaufschlagt wird.

Dadurch, daß die Außenseiten der Kragen 270 und 158 flächig gegen die Außenseite 282 des Dichtelements 280 gepreßt werden, ist eine zuverlässige, gasdichte und elektrisch isolierende Abdichtung des von dem Dichtelement 280 überdeckten Dichtspalts 278 gewährleistet.

Der Flanschbereich 136 der Kontaktplatte 118 und der Fluidführungsrahmen 120 werden vorzugsweise aus einem hitzebeständigen Stahl hergestellt.

Beispielsweise kann als Material für diese Bauelemente ein ferritischer Stahl mit der Werkstoffnummer 1.4742 (nach SEW 470) verwendet werden, welcher folgende Zusammensetzung aufweist:

0,08 Gewichts-% Kohlenstoff, 1,3 Gewichts-% Silizium, 0,7 Gewichts-% Mangan, 18 Gewichts-% Chrom, 1 Gewichts-% Aluminium, Rest Eisen. Ein solcher Stahl weist eine gute Temperaturbeständigkeit bis zu einer Temperatur von 1000°C auf. Der mittlere lineare Wärmeausdehnungskoeffizient dieses Materials zwischen 20°C und 600°C beträgt ungefähr 12 · 10⁻⁶ K⁻¹ und ist somit ungefähr gleich groß wie der mittlere lineare Wärmeausdehnungskoeffizient von teilstabilisiertem Zirkonoxid in diesem Temperaturbereich. Wird das Dichtelement 280 aus teilstabilisierten Zirkonoxid und die Kontaktplatte 118 und der Fluidführungsrahmen aus dem Stahl 1.4742 hergestellt, so dehnen sich das Dichtelement 280 und die Kragen 270 sowie 158 beider Erwärmung der Brennstoffzellenvorrichtung von Raumtemperatur auf die Betriebstemperatur von ungefähr 800°C im wesentlichen gleich stark aus, so daß die bei Raumtemperatur bestehende Vorspannung des Dichtelements 280 durch die Kragen 270 und 158 auch bei der Betriebstemperatur der Gaskanal-Dichtung 188 im wesentlichen unverändert bleibt, so daß ein hoher Anpressdruck der Außenseiten der Kragen 270, 158 gegen die Außenseite des Dichtelements 280 und somit eine Gasdichtheit der Gaskanal-Dichtung 188 gewährleistet ist.

Werden statt des teilstabilisierten Zirkonoxids Forsterit oder Aluminiumoxid C799 verwendet, so ist der mittlere lineare Wärmeausdehnungskoeffizient des Dichtelements 280 kleiner als der mittlere lineare Wärmeausdehnungskoeffizient der Kragen 158, 270. In diesem Fall dehnen sich die Kragen 270, 158 bei der Erwärmung auf die Betriebstemperatur stärker aus als das Dichtelement 280, so daß die auf das Dichtelement 280 wirkende Druckspannung im Betriebszustand der Gaskanal-Dichtung 188 geringer ist als bei Raumtemperatur. Die auf das Dichtelement 280 bei Raumtemperatur wirkende Druck-Vorspannung wird jedoch in diesem Fall so groß gewählt, daß auch nach einer Verringerung der Druckspannung durch die unterschiedliche Wärmedehnung von Dichtelement 280 und Kragen 270, 158 der Anpreßdruck, mit dem die Außenseiten der Kragen 270, 158 bei Betriebstemperatur gegen die Außenseite 282 des Dichtelements 280 gedrückt werden, noch ausreichend hoch ist, um die erforderliche Gasdichtheit der Gaskanal-Dichtung 188 sicherzustellen.

Wird das Dichtelement 280 aus einem keramischen Material gebildet, welches einen höheren mittleren linearen Wärmeausdehnungskoeffizienten aufweist als das Material der Kragen 270, 158, so nimmt die auf das Dichtelement 280 wirkende Druckspannung beim Erwärmen auf die Betriebstemperatur sogar noch zu.

In diesem Fall können die Kragen 270, 158 bei Raumtemperatur druckfrei an dem Dichtelement anliegen oder sogar von demselben beabstandet sein. Bei der Erwärmung auf die Betriebstemperatur dehnt sich dann das Dichtelement 280 stärker aus als die Kragen 270, 158, so daß die Außenseiten der Kragen 270, 158 mit dem für eine gute Gasdichtheit erforderlichen Anpreßdruck gegen die Außenseite 282 des Dichtelements 280 gepreßt werden.

In diesem Fall brauchen die Kragen 270, 158 bei der Herstellung der Brennstoffzellenvorrichtung 100 nicht auf das Dichtelement 280 aufgeschrumpft zu werden; vielmehr genügt es, das Dichtelement 280 in die Kragen 270, 158 einzusetzen.

Wie am besten aus den Fig. 4 und 7 zu ersehen ist, ist jede KAE-Einheit 116 am Rand ihrer dem Fluidführungsrahmen 120 derselben Brennstoffzelleneinheit 114 zugewandten Oberseite mit einer gasdichten, elektrisch isolierenden Brenngasraum-Dichtung 186 versehen, die seitlich über die KAE-Einheit 116 übersteht.

Diese Brenngasraum-Dichtung 186 kann beispielsweise eine Flachdichtung aus Glimmer umfassen.

Insbesondere kann diese Flachdichtung Spaltglimmer, vorzugsweise Phlogopit, oder ein auf einer Papiermaschine hergestelltes Glimmerpapier umfassen.

Die Brennstoffzelleneinheiten 114 des Brennstoffzellenblockverbunds 106 sind längs der Stapelrichtung 112 so aufeinandergestapelt, daß die kathodenseitigen Kontaktelemente 132b jeder Kontaktplatte 118 sich durch die Durchtrittsöffnung 170 im Fluidführungsrahmen 120 der jeweils darunter angeordneten Brennstoffzelleneinheit 114 zu der Kathode der KAE-Einheit 116 der darunter angeordneten Brennstoffzelleneinheit 114 erstrecken und in elektrisch leitendem Kontakt an derselben anliegen.

Der Kragen 270 des Flanschbereichs 270 jeder Kontaktplatte 118 liegt dabei über die Gaskanal-Dichtung 188 an dem Kragen 158 des Fluidführungsrahmens 120 der jeweils darunter angeordneten Brennstoffzelleneinheit 114 an.

Der die Brenngasdurchgangsöffnung 154 umgebende Endbereich 152 jedes Fluidführungsrahmens 120 bildet einen Brenngasführungsbereich. Der die Abgasdurchgangsöffnung 156 umgebende Endbereich 152 jedes Fluidführungsrahmens 120 bildet einen Abgasführungsbereich.

Wie am besten aus der Schnittdarstellung der Fig. 2 zu ersehen ist, bilden die längs der Stapelrichtung 112 aufeinanderfolgenden Brenngasführungsbereiche der Fluidführungsrahmen 120 zusammen einen sich parallel zur Stapelrichtung 112 erstreckenden Brenngaskanal 190, der an seinem oberen Ende in einer Ausnehmung 192 an der Unterseite der oberen Endplatte 110 mündet.

An dem unteren Ende des Brenngaskanals 190 mündet in denselben eine Brenngaszuführöffnung 194, welche die untere Endplatte 108 des Brennstoffzellenblockverbunds 106 koaxial zu dem Brenngaskanal 190 durchsetzt.

An das dem Brenngaskanal 190 abgewandte Ende der Brenngaszuführöffnung 194 ist eine Brenngaszuführleitung 196 angeschlossen, welche durch das Gehäuse 102 der Brennstoffzellenvorrichtung 100 gasdicht hindurchgeführt und an eine (nicht dargestellte) Brenngaszufuhr angeschlossen ist, welche der Brenngaszuführleitung 196 ein Brenngas, beispielsweise ein kohlenwasserstoffhaltiges Gas oder reinen Wasserstoff, zuführt.

Wie ebenfalls aus Fig. 2 zu ersehen ist, bilden die Abgasführungsbereiche der längs der Stapelrichtung 112 aufeinanderfolgenden Fluidführungsrahmen 120 zusammen einen Abgaskanal 198, der parallel zu der Stapelrichtung 112 ausgerichtet ist und an seinem unteren Ende durch einen an der Oberseite der unteren Endplatte 108 des Brennstoffzellenblockverbunds 106 vorgesehenen Vorsprung 200 verschlossen ist.

An seinem oberen Ende mündet der Abgaskanal 198 in eine zu demselben koaxiale Abgasabführöffnung 202, welche die obere Endplatte 110 des Brennstoffzellenblockverbunds 106 durchsetzt und an ihrem dem Abgaskanal 198 abgewandten Ende an eine Abgasabführleitung 204 angeschlossen ist.

Die Abgasabführleitung 204 ist gasdicht durch das Gehäuse 102 der Brennstoffzellenvorrichtung 100 hindurchgeführt und an eine (nicht dargestellte) Abgasbehandlungseinheit angeschlossen.

Im Betrieb der Brennstoffzellenvorrichtung 100 strömt das Brenngas durch die Brenngaszuführleitung 196 und die Brenngaszuführöffnung 194 in den Brenngaskanal 190 ein und verteilt sich von dort durch die Zwischenräume zwischen den Kontaktplatten 118 und den jeweils derselben Brennstoffzelleneinheit 114 zugehörigen Fluidführungsrahmen 120 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 116 der betreffenden Brennstoffzelleneinheit 114 umschlossen sind.

Das Brenngas wird zumindest teilweise an der Anode 122 der jeweiligen KAE-Einheit 116 oxidiert.

Das Oxidationsprodukt (beispielsweise Wasser) gelangt zusammen mit überschüssigem Brenngas aus den Brenngasräumen 124 der Brennstoffzelleneinheiten 114 in den Abgaskanal 198, aus welchem es durch die Abgasabführöffnung 202 und die Abgasabführleitung 204 zu der Abgasbehandlungseinheit abgeführt wird.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Austrittsseite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 210, die Strömungsrichtung des Oxidationsmittels durch die Brennstoffzellenvorrichtung 100 mittels Doppelpfeilen 212 angegeben.

Um die längs der Stapelrichtung 112 aufeinanderfolgenden Brennstoffzelleneinheiten 114 durch äußere Verspannung aneinander festzulegen, sind mehrere Verbindungsschrauben 214 vorgesehen, welche Durchgangsbohrungen 216 in den Endplatten 108, 110 des Brennstoffzellenblockverbunds 106 durchsetzen und an ihrem dem jeweiligen Schraubenkopf 218 abgewandten Ende mit einem Außengewinde 220 versehen sind, in welches jeweils eine Verbindungsmutter 222 eingedreht ist, so daß die Endplatten 108, 110 zwischen den Schraubenköpfen 218 und den Verbindungsmuttern 222 eingespannt sind und eine gewünschte Preßkraft über die Endplatten 108, 110 auf den Stapel der Brennstoffzelleneinheiten 114 übertragbar ist (siehe Fig. 2).

Der vorstehend beschriebene Brennstoffzellenblockverbund 106 wird wie folgt montiert:
Zunächst werden die einzelnen Brennstoffzelleneinheiten 114 montiert, indem jeweils eine KAE-Einheit 116 zwischen einer Kontaktplatte 118 und einem Fluidführungsrahmen 120 angeordnet wird und anschließend die aneinander anliegenden Flanschbereiche 136 der Kontaktplatte 118 sowie der Flanschbereich des Fluidführungsrahmens 120 gasdicht, beispielsweise durch Verschweißen oder Verlöten, miteinander verbunden werden.

Dann wird der Brennstoffzellenblockverbund 106 aus den einzelnen Brennstoffzelleneinheiten 114 zusammengesetzt, indem die gewünschte Anzahl von Brennstoffzelleneinheiten 114 längs der Stapelrichtung 112 gestapelt wird und jeweils ein Kragen 270 einer Kontaktplatte 118 mit dem Kragen 158 des Fluidführungsrahmens 120 einer benachbarten Brennstoffzelleneinheit 114 mittels eines in Preßpassung in diesen Kragen sitzenden Dichtelements 280 verbunden wird.

Schließlich werden die Brennstoffzelleneinheiten 114 mittels der Endplatten 108, 110 und der die Endplatten gegeneinander verspannenden Verbindungsschrauben 214 und Verbindungsmuttern 222 gegeneinander verspannt.

Eine in Fig. 10 dargestellte zweite Ausführungsform einer Brennstoffzellenvorrichtung 100 unterscheidet sich von der vorstehend beschriebenen ersten Ausführungsform lediglich durch die Ausgestaltung der Gaskanal-Dichtung 188.

Wie aus Fig. 10 zu ersehen ist, weist das Dichtelement 280' bei dieser zweiten Ausführungsform keinen an der Außenseite 282 umlaufenden Vorsprung auf; vielmehr ist die Außenseite 282 des Dichtelements 280 durchgehend eben ausgebildet.

Gleichwohl bleibt die erforderliche elektrische Isolationswirkung der Gaskanal-Dichtung 188 erhalten, da der untere Rand 274 des Kragens 270 an der Kontaktplatte 118 und der obere Rand 276 des Kragens 158 an dem Fluidführungsrahmen 120 durch den Dichtspalt 278 voneinander getrennt sind. Aufgrund der hohen Reibung zwischen den Außenseiten der Kragen 270, 158 einerseits und der Außenseite 282 des Dichtelements 280' andererseits, die durch die hohe Pressung zwischen diesen Bauelementen hervorgerufen wird, ist gewährleistet, daß sich die beiden Kragen 270, 158 nicht relativ zu dem Dichtelement 280' und somit nicht aufeinander zu bewegen.

Durch das Fehlen des Vorsprungs an der Außenseite 282 des Dichtelements 280' ist das Dichtelement 280' der zweiten Ausführungsform einfacher herstellbar und leichter nacharbeitbar als das Dichtelement 280 der ersten Ausführungsform.

Im übrigen stimmt die zweite Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

Eine in Fig. 11 dargestellte dritte Ausführungsform einer Brennstoffzellenvorrichtung 100 unterscheidet sich von der vorstehend beschriebenen ersten Ausführungsform lediglich hinsichtlich der Ausgestaltung der Gaskanal-Dichtung 188.

Wie aus Fig. 11 zu ersehen ist, liegen die Kragen 270, 158 bei dieser Ausführungsform nicht mit ihren Außenseiten an der Außenseite 282 des Dichtelements der Gaskanal-Dichtung 188, sondern vielmehr mit ihren Innenseiten an der Innenseite 286 des als ringförmig geschlossene Hülse aus einem keramischen Material ausgebildeten Dichtelements 280' an.

Bei dieser Konfiguration der Gaskanal-Flachdichtung 188 würde das Dichtelement 280' durch die Kragen 270, 158 also nicht auf Druck, sondern auf Zug beansprucht, was für ein keramisches Material ungünstig ist.

Diese Zugbeanspruchung des Dichtelements 280 wird daher durch eine Druckbeanspruchung ausgeglichen oder überkompensiert, welche mittels einer das Dichtelement 280' ringförmig umgebenden, mit ihrer Innenseite flächig an der

Außenseite 282 des Dichtelements 280' anliegenden Spannhülse 288 erzeugt wird.

Die Spannhülse 288 wird beispielsweise aus einem Stahl gebildet, welcher bei der Betriebstemperatur der Brennstoffzellenvorrichtung von ungefähr 800°C beständig ist.

Die erforderliche Druckspannungsbeaufschlagung des Dichtelements 280' durch die Spannhülse 288 wird erreicht, indem die Spannhülse 288 bei der Herstellung der Gaskanal-Flachdichtung 188 auf das Dichtelement 280' aufgeschrumpft wird und/oder indem ein Material für die Spannhülse 288 verwendet wird, welches einen kleineren mittleren linearen Wärmeausdehnungskoeffizienten aufweist als das Material des Dichtelements 280'.

Das Material der Kragen 270, 158 sollte bei dieser Ausführungsform einen mittleren linearen Wärmeausdehnungskoeffizienten aufweisen, welcher mindestens gleich groß oder nur geringfügig kleiner ist als der mittlere lineare Wärmeausdehnungskoeffizient des Materials des Dichtelements 280', um beim Erwärmen der Gaskanal-Dichtung 188 auf die Betriebstemperatur das Entstehen eines Spaltes zwischen den Innenseiten der Kragen 270, 158 einerseits und der Innenseite 286 des Dichtelements 280' andererseits zu verhindern.

Das Dichtelement 280' der dritten Ausführungsform weist ebenso wie das Dichtelement 280' der zweiten Ausführungsform keinen an der Außenseite umlaufenden Vorsprung auf.

Im übrigen stimmt die dritte Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

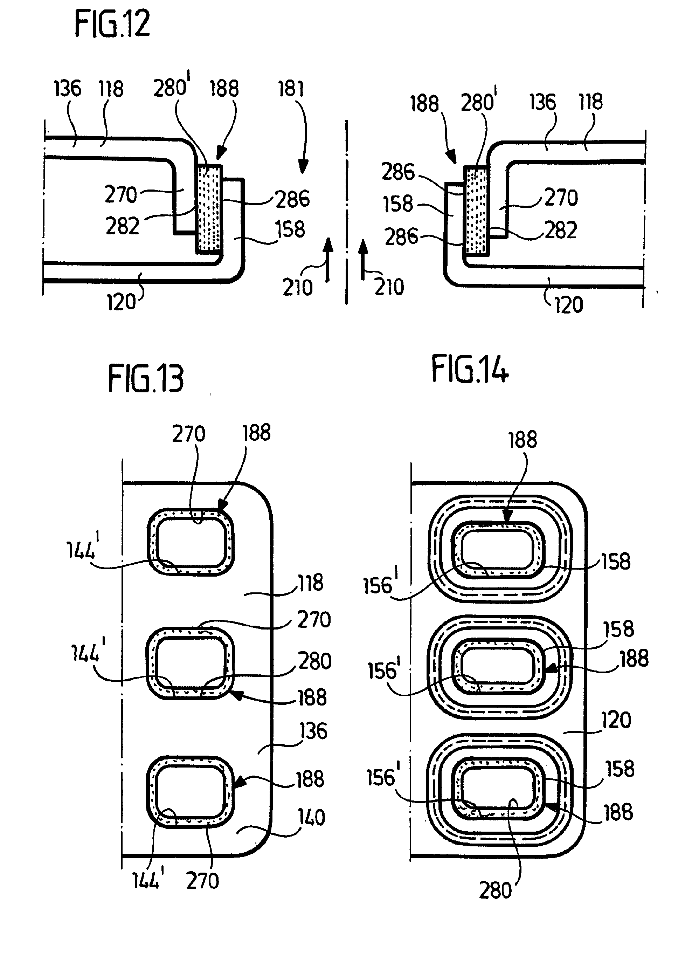

Eine in Fig. 12 dargestellte vierte Ausführungsform einer Brennstoffzellenvorrichtung 100 unterscheidet sich von der vorstehend beschriebenen ersten Ausführungsform lediglich durch die Ausgestaltung der Gaskanal-Dichtung 188.

Wie aus Fig. 12 zu ersehen ist, liegt bei dieser Ausführungsform nur der Kragen 270 der Kontaktplatte 118 mit seiner Außenseite an der Außenseite 282 des Dichtelements 280' an; der Kragen 158 des Fluidführungsrahmens 120 greift hingegen von der Unterseite her in die Ring-Durchgangsöffnung 281 des Dichtelements 280' ein und liegt mit seiner Innenseite flächig an der Innenseite 286 des Dichtelements 280' an.

Bei dieser Ausführungsform wird das Dichtelement 280' durch den Kragen 158 an dem Fluidführungsrahmen auf Zug und durch den Kragen 270 an der Kontaktplatte 118 auf Druck beansprucht.

Dabei werden die Geometrie der beteiligten Bauteile und deren Wärmeausdehnungskoeffizienten so gewählt, daß die Druckbeanspruchung durch den Kragen 270 an der Kontaktplatte 118 die Zugbeanspruchung durch den Kragen 159 an dem Fluidführungsrahmen 120 übertrifft.

Insbesondere kann vorgesehen sein, daß der Kragen 270 an der Kontaktplatte 118 bei der Herstellung der Gaskanal-Dichtung 188 auf die Außenseite 282 des Dichtelements 280' aufgeschrumpft wird.

Ferner ist es von Vorteil, wenn der Flanschbereich 136 der Kontaktplatte 118 aus einem Material gebildet ist, welches einen kleineren mittleren linearen Wärmeausdehnungskoeffizienten aufweist als das Material des Dichtelements 280'.

Als Material für den Fluidführungsrahmen 120 wird vorzugsweise ein Material gewählt, dessen mittlerer linearer Wärmeausdehnungskoeffizient mindestens gleich groß ist wie oder nur geringfügig kleiner ist als der mittlere lineare Wärmeausdehnungskoeffizient des Materials des Dichtelements 280', um zu verhindern, daß sich bei der Erwärmung der Gaskanal-Dichtung 188 auf die Betriebstemperatur zwischen der Innenseite 286 des Dichtelements 280' und der Innenseite des Kragens 158 an dem Fluidführungsrahmen 120 ein Spalt ausbildet.

Die Ring-Durchgangsöffnung 281 wird von der Seite her mit Brenngas bzw. Abgas durchströmt, von welcher der an der Innenseite 286 des Dichtelements 280' anliegende Kragen 158 in das Dichtelement 280' eingreift. Dadurch werden die Anlageflächen, an denen der Kragen 158 bzw. der Kragen 270 an dem Dichtelement 280' anliegen, nicht direkt von dem Gas angeströmt, was den Gasdurchtritt durch die Gaskanal-Dichtung 188 im Falle eventuell auftretender Undichtigkeiten verringert.

Das Dichtelement 280' der vierten Ausführungsform weist ebenso wie die Dichtelemente 280' der zweiten und der dritten Ausführungsform keinen längs seiner Außenseite 282 umlaufenden Vorsprung auf.

Im übrigen stimmt die vierte Ausführungsform einer Brennstoffzellenvorrichtung 100 hinsichtlich Aufbau und Funktion mit der ersten Ausführungsform überein, auf deren vorstehende Beschreibung insoweit Bezug genommen wird.

Eine in den Fig. 13 und 14 dargestellte fünfte Ausführungsform einer Brennstoffzellenvorrichtung 100 unterscheidet sich von den vorstehend beschriebenen Ausführungsformen lediglich dadurch, daß jeder Seitenbereich 140 des Flanschbereichs 136 einer Kontaktplatte 118 nicht lediglich eine Durchgangsöffnung 144, sondern statt dessen mehrere, beispielsweise drei, kleinere Durchgangsöffnungen 144' aufweist (siehe Fig. 13).

In entsprechender Weise weist jeder Fluidführungsrahmen 120 an seinen Endbereichen mehrere, beispielsweise drei, den Durchgangsöffnungen 144' in den Kontaktplatten entsprechende Brenngasdurchgangsöffnungen und Abgasdurchgangsöffnungen 156' auf.

Jede der Durchgangsöffnungen in den Fluidführungsrahmen 120 ist in der vorstehend beschriebenen Weise mit einem zu einer benachbarten Kontaktplatte 118 hin weisenden Kragen 158 versehen.

Jede der Durchgangsöffnungen 144' in den Kontaktplatten 118 ist in der vorstehend beschriebenen Weise mit einem zu einem benachbarten Fluidführungsrahmen 120 hin gerichteten Kragen 270 versehen.

Jeweils ein Kragen 270 einer Kontaktplatte 118 und ein Kragen 158 eines Fluidführungsrahmens 120 sind in der vorstehend beschriebenen Weise über eine Gaskanal-Dichtung 188 gasdicht und elektrisch isolierend miteinander verbunden.

Diese Gaskanal-Dichtungen können in jeder vorstehend beschriebenen Weise ausgebildet sein.

Da die Durchgangsöffnungen 144', 156' bei der fünften Ausführungsform jedoch (bei gleicher Gesamt-Gasdurchtrittsfläche) kleiner sind als die entsprechenden Durchgangsöffnungen bei der ersten bis vierten Ausführungsform, können die Dichtelemente 280, 280' der Gaskanal-Dichtungen 188 bei der fünften Ausführungsform kleiner, insbesondere mit kürzerer Umfangslänge, ausgebildet werden als bei den anderen Ausführungsformen.

Dies erleichtert die Herstellung dieser Dichtelemente und verringert die Gefahr einer Rißbildung oder gar eines Bruches des Dichtelements.

Im übrigen stimmt die fünfte Ausführungsform einer Brennstoffzellenvorrichtung 100 hinsichtlich Aufbau und Funktion mit den zuvor beschriebenen Ausführungsformen überein, auf deren vorstehende Beschreibung insoweit Bezug genommen wird.

## Patentansprüche

1. Dichtung zum Abdichten eines Dichtspalts (278) zwischen zwei abzudichtenden, elektrisch leitfähigen Bauteilen (118, 120), insbesondere zwischen zwei Bauteilen eines Brennstoffzellenblockverbunds (106), unter elektrischer Isolation der abzudichtenden Bauteile (118, 120),
**dadurch gekennzeichnet,**
**daß** die Dichtung (188) mindestens ein Dichtelement (280; 280') umfaßt, welches ein keramisches Material umfaßt, wobei die Dichtung (188) ringförmig ausgebildet ist und mindestens eine Anlagefläche für mindestens eines der abzudichtenden Bauteile (118, 120) aufweist, welche zumindest teilweise im wesentlichen parallel oder schräg zur Ringachse (283) der Dichtung (188) ausgerichtet ist.

2. Dichtung nach Anspruch 1, **dadurch gekennzeichnet, daß** das Dichtelement (280; 280') im Betriebszustand der Dichtung mit einer Druckspannung beaufschlagt ist.

3. Dichtung nach einem der Ansprüche 1 oder 2, **dadurch gekennzeichnet, daß** das Dichtelement (280; 280') bei Raumtemperatur mit einer Druckspannung beaufschlagt ist.

4. Dichtung nach einem der Ansprüche 1 bis 3, **dadurch gekennzeichnet, daß** das Dichtelement (280; 280') mindestens einen gekrümmten Abschnitt (285) aufweist.

5. Dichtung nach einem der Ansprüche 1 bis 4, **dadurch gekennzeichnet, daß** das Dichtelement (280; 280') ringförmig geschlossen ausgebildet ist.

6. Dichtung nach einem der Ansprüche 1 bis 5, **dadurch gekennzeichnet, daß** das Dichtelement (280; 280') einstückig ausgebildet ist.

7. Dichtung nach einem der Ansprüche 1 bis 6, **dadurch gekennzeichnet, daß** das Dichtelement im Betriebszustand der Dichtung (188) mit einer Druckspannung beaufschlagt ist, die von einer der Ringsachse (283) abgewandten Außenseite (282) zu einer der Ringachse (283) zugewandten Innenseite (286) des Dichtelements (280; 280') hin gerichtet ist.

8. Dichtung nach Anspruch 7, **dadurch gekennzeichnet, daß** die Außenseite (282) des Dichtelements (280; 280') zumindest teilweise konvex gekrümmt ist.

9. Dichtung nach einem der Ansprüche 7 oder 8, **dadurch gekennzeichnet, daß** die Innenseite (286) des Dichtelements (280, 280') zumindest teilweise konkav gekrümmt ist.

10. Dichtung nach einem der Ansprüche 1 bis 9, **dadurch gekennzeichnet, daß** das Dichtelement (280) mit einem sich in der Längsrichtung des Dichtelements (280) erstreckenden Vorsprung (284) versehen ist.

11. Dichtung nach einem der Ansprüche 1 bis 10, **dadurch gekennzeichnet, daß** die Dichtung (188) ein Spannelement (288) umfaßt, das im Betriebszustand der Dichtung (188) das Dichtelement (280') mit einer Druckspannung beaufschlagt.

12. Dichtung nach Anspruch 11, **dadurch gekennzeichnet, daß** das Dichtelement (280') eine zumindest teilweise konvex gekrümmte Außenseite (282) aufweist und daß das Spannelement (288) im Betriebszustand der Dichtung (188) an der Außenseite (282) anliegt.

13. Dichtung nach einem der Ansprüche 11 oder 12, **dadurch gekennzeichnet, daß** der mittlere lineare Wärmeausdehnungskoeffizient des Materials des Dichtelements (280') gleich groß ist wie oder größer ist als der mittlere lineare Wärmeausdehnungskoeffizient des Materials des Spannelements (288).

14. Dichtung nach einem der Ansprüche 11 bis 13, **dadurch gekennzeichnet, daß** das Dichtelement (280') in Preßpassung in dem Spannelement (288) angeordnet ist.

15. Dichtung nach einem der Ansprüche 11 bis 14, **dadurch gekennzeichnet, daß** das Spannelement (288) auf das Dichtelement (280') aufgeschrumpft ist.

16. Bauteilgruppe, umfassend zwei gegeneinander abzudichtende, elektrisch leitfähige Bauteile (118, 120), insbesondere Bauteile eines Brennstoffzellenblockverbundes (106), und eine einen Dichtspalt (278) zwischen den beiden abzudichtenden Bauteilen (118, 120) unter elektrischer Isolation der abzudichtenden Bauteile abdichtende Dichtung (188) nach einem der Ansprüche 1 bis 15.

17. Bauteilgruppe nach Anspruch 16, **dadurch gekennzeichnet, daß** das Dichtelement (280, 280') eine zumindest teilweise konvex gekrümmte Außenseite (282) aufweist und daß mindestens eines der abzudichtenden Bauteile (118, 120) im Betriebszustand der Dichtung (188) an der Außenseite (282) anliegt.

18. Bauteilgruppe nach Anspruch 17, **dadurch gekennzeichnet, daß** der mittlere lineare Wärmeausdehnungskoeffizient des Materials des Dichtelements (280; 280') gleich groß ist wie oder größer ist als der mittlere lineare Wärmeausdehnungskoeffizient des Materials des an der Außenseite (282) des Dichtelements (280; 280') anliegenden abzudichtenden Bauteils (118, 120).

19. Bauteilgruppe nach einem der Ansprüche 17 oder 18, **dadurch gekennzeichnet, daß** das Dichtelement (280; 280') in Preßpassung in dem an der Außenseite (282) des Dichtelements (280; 280') anliegenden abzudichtenden Bauteil (118, 120) angeordnet ist.

20. Bauteilgruppe nach einem der Ansprüche 17 bis 19, **dadurch gekennzeichnet, daß** das an der Außenseite (282) des Dichtelements (280; 280') anliegende abzudichtende Bauteil (118, 120) auf das Dichtelement (280; 280') aufgeschrumpft ist.

21. Bauteilgruppe nach einem der Ansprüche 17 bis 20, **dadurch gekennzeichnet, daß** beide abzudichtenden Bauteile (118, 120) an der Außenseite (282) des Dichtelements (280; 280') anliegen.

22. Bauteilgruppe nach einem der Ansprüche 17 bis 20, **dadurch gekennzeichnet, daß** das Dichtelement (280') eine zumindest teilweise konkav gekrümmte Innenseite (286) aufweist und daß das weitere der abzudichtenden Bauteile (120) an der Innenseite (286) des Dichtelements (280') anliegt.

23. Bauteilgruppe nach Anspruch 22, **dadurch gekennzeichnet, daß** das Material des Dichtelements (280') einen mittleren linearen Wärmeausdehnungskoeffizienten aufweist, der gleich groß ist wie oder kleiner ist als der mittlere lineare Wärmeausdehnungskoeffizient des Materials des an der Innenseite (286) des Dichtelements (280') anliegenden Bauteils (120) und gleich groß ist wie oder größer ist als der mittlere lineare Ausdehnungskoeffizient des Materials des an der Außenseite (282) des Dichtelements (280') anliegenden Bauteils (118).

24. Bauteilgruppe nach einem der Ansprüche 16 bis 23, **dadurch gekennzeichnet, daß** mindestens eines der abzudichtenden Bauteile (118, 120) eine Durchgangsöffnung (144, 156; 144', 156') und einen diese Durchgangsöffnung zumindest teilweise berandenden Kragen (158, 270) aufweist, wobei der Kragen (158, 270) zumindest teilweise an dem Dichtelement (280; 280') anliegt.

25. Brennstoffzellenblockverbund, umfassend mindestens eine Bauteilgruppe nach einem der Ansprüche 16 bis 24.

26. Brennstoffzellenblockverbund nach Anspruch 25, **dadurch gekennzeichnet, daß** die Ringachse (283) der Dichtung (188) im wesentlichen parallel zu einer Stapelrichtung (112), längs welcher Brennstoffzelleneinheiten (114) des Brennstoffzellenblockverbundes (106) gestapelt sind, ausgerichtet ist.

27. Brennstoffzellenblockverbund nach einem der Ansprüche 25 oder 26, **dadurch gekennzeichnet, daß** die Ring-Durchgangsöffnung (281) der Dichtung (188) im Betrieb des Brennstoffzellenblockverbunds (106) von einem Fluid durchströmt wird.
